# EUROPEAN PATENT APPLICATION

(11) **EP 4 799 841 A1**
(43) Date of publication of application: **02.09.2026**
(21) Application number: 26157017.0
(22) Date of filing: 06.02.2026
(51) Int. Cl.: B60K 6/387, B60K 6/405, B60K 6/52, F16H 57/04

(54) **DRIVING DEVICE AND ELECTRIC VEHICLE**

(30) Priority: 28.02.2025 JP 2025031990
(71) Applicant: Toyota Jidosha Kabushiki Kaisha, Toyota-shi, Aichi-ken 471-8571 (JP)
(72) Inventor: SUGIYAMA, Masataka, TOYOTA-SHI, AICHI-KEN, 471-8571 (JP); TAKADA, Norifumi, TOYOTA-SHI, AICHI-KEN, 471-8571 (JP); SEGAWA, Taku, TOYOTA-SHI, AICHI-KEN, 471-8571 (JP); OKAYA, Shingo, TOYOTA-SHI, AICHI-KEN, 471-8571 (JP)
(74) Representative: Cabinet Beau de Loménie

(57) **Abstract**

A driving device includes a first accommodating chamber (200), a second accommodating chamber (300), a partition wall (190) between the first accommodating chamber (200) and the second accommodating chamber (300), and a through-hole (191) formed in the partition wall (190). A speed reduction mechanism (40) includes a rotary shaft (44) extending from the first accommodating chamber (200) to the second accommodating chamber (300) through the through-hole (191), a first reduction gear (41) that is a hypoid gear, and a second reduction gear (42). The first accommodating chamber (200) accommodates a hypoid pinion (31) and the first reduction gear (41), and contains a first oil. The second accommodating chamber (300) accommodates a second motor-generator (50) and contains a second oil having a lower viscosity than the first oil. An oil seal (105) provides sealing between the rotary shaft (44) and the through-hole (191).

## Description

### BACKGROUND

### 1. Field

The present disclosure relates to a driving device and an electric vehicle.

### 2. Description of Related Art

JP2005-231526A discloses a vehicle including an engine, a propeller shaft, a motor, a differential device, and two rear wheel drive shafts. The differential device distributes the drive power transmitted from the propeller shaft and the motor to the two rear wheel drive shafts. The motor, the differential device, and gears for transmitting the drive power to the differential device are accommodated in a differential carrier.

The differential device and the gears for transmitting the drive power to the differential device are lubricated by oil contained in the differential carrier. The motor is cooled by the oil.

The gears that transmit drive power to the two rear wheel drive shafts often include a hypoid gear. When the oil for lubricating the hypoid gear and the oil for cooling the motor are the same, use of high-viscosity oil to lubricate the hypoid gear may reduce the cooling efficiency of the motor.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a driving device mounted on a vehicle includes a housing, a motor, an output gear, a hypoid pinion, and a speed reduction mechanism. The housing includes a first accommodating chamber, a second accommodating chamber, a partition wall between the first accommodating chamber and the second accommodating chamber, and a through-hole formed in the partition wall. The output gear is provided on an output shaft of the motor. The hypoid pinion is provided at a rear end of a propeller shaft in a front-rear direction of the vehicle. Rotation of the output gear and rotation of the hypoid pinion are transmitted to the speed reduction mechanism. The speed reduction mechanism includes a rotary shaft extending from the first accommodating chamber to the second accommodating chamber through the through-hole, a first reduction gear that is a hypoid gear meshing with the hypoid pinion, and a second reduction gear that meshes with the output gear. The driving device is configured such that the first reduction gear and the second reduction gear are fixed to the rotary shaft to transmit rotation of the propeller shaft to the rotary shaft via the first reduction gear, and to transmit rotation of the output shaft to the rotary shaft via the second reduction gear. The first accommodating chamber accommodates the hypoid pinion and the first reduction gear, and contains a first oil. The second accommodating chamber accommodates the motor and contains a second oil having a lower viscosity than the first oil. An oil seal provides sealing between the rotary shaft and the through-hole.

In another general aspect, an electric vehicle includes power sources including an engine and a motor. The electric vehicle also includes a battery cell that stores electric power to be supplied to the motor, and a battery pack that accommodates the battery cell therein. The electric vehicle also includes a propeller shaft that transmits rotational drive power output from the engine rearward, and a driving device.

Other features and aspects will be apparent from the following detailed description, the drawings, and the claims.

### BRIEF DESCRIPTION OF THE DRAWINGS

Fig. 1 is a schematic diagram showing a configuration of a drivetrain and an electrical system of an electric vehicle according to an embodiment.
Fig. 2 is a schematic diagram showing an internal structure of the driving device shown in Fig. 1.
Fig. 3 is a cross-sectional view taken along line 3-3 shown in Fig. 2, illustrating the driving device.
Fig. 4 is a cross-sectional view taken along line 4-4 shown in Fig. 2, illustrating the driving device.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

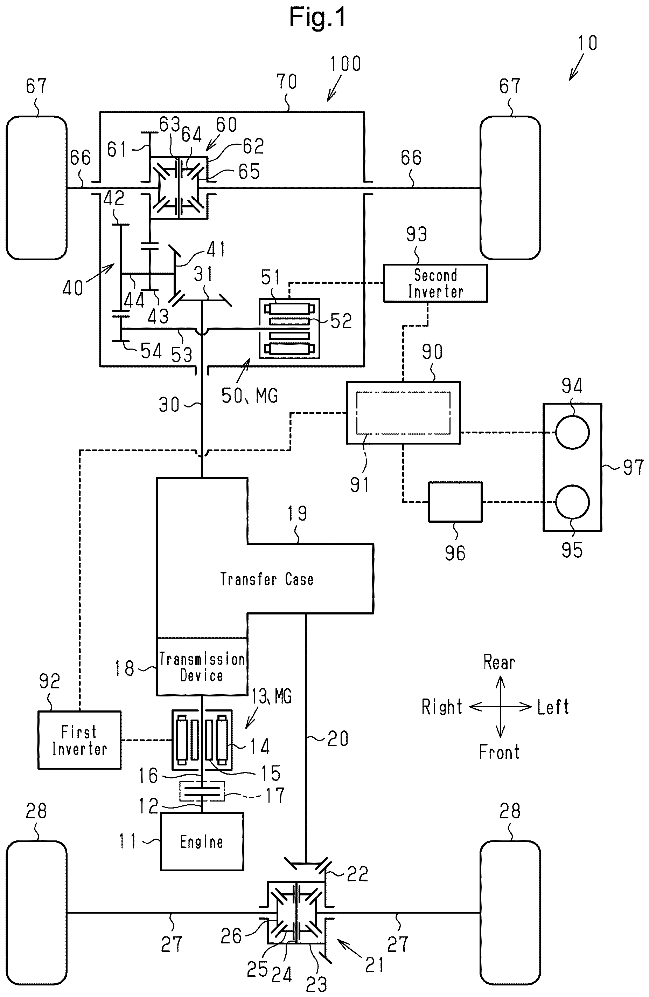

A driving device 100 and an electric vehicle 10 according to an embodiment will now be described with reference to Figs. 1 to 4. In the following description, the frontward, rearward, leftward, rightward, upward, and downward directions are defined with reference to the forward traveling direction of the vehicle. The left-right direction corresponds to the vehicle width direction.

### Structure of the Electric Vehicle 10

Fig. 1 schematically shows a configuration of a drivetrain and an electrical system of the electric vehicle 10, which mounts the driving device 100. Broken lines shown in Fig. 1 indicate electrical connections.

Fig. 1 does not faithfully show the actual relative placement of a rear propeller shaft 30, a hypoid pinion 31, a second motor-generator 50, a speed reduction mechanism 40, and a rear differential 60, which form part of the drivetrain of the electric vehicle 10. Fig. 1 also does not faithfully show the actual relative placement of a battery pack 90, a first inverter 92, a second inverter 93, a first charging port 94, a second charging port 95, a vehicle on-board charger 96, and a charging port assembly 97, which form part of the electrical system of the electric vehicle 10.

As shown in Fig. 1, the electric vehicle 10 includes an engine 11 as a power source, a first motor-generator 13, and the second motor-generator 50. The engine 11 is a power source provided near front wheels 28, and is a known internal combustion engine. The electric vehicle 10 includes a pair of left and right front wheels 28 and a pair of left and right rear wheels 67. The rear wheels 67 serve as primary drive wheels that are driven during both two-wheel-drive operation and four-wheel-drive operation. The front wheels 28 serve as non-driven wheels during two-wheel-drive operation and as auxiliary drive wheels during four-wheel-drive operation. The electric vehicle 10 is a four-wheel-drive vehicle based on a front-engine, rear-drive (FR) layout.

### Electrical System of the Electric Vehicle 10

The electric vehicle 10 includes the battery pack 90. The battery pack 90 accommodates multiple battery cells 91 therein. In Fig. 1, the battery cells 91, which are tightly packed within the battery pack 90, are collectively depicted surrounded by a long-dash short-dash line. The battery cells 91 store electric power to be supplied to the first motor-generator 13 and the second motor-generator 50. The first motor-generator 13 and the second motor-generator 50 function as motors MG that are power sources of the electric vehicle 10. That is, the multiple battery cells 91 store electric power to be supplied to the motors MG, which are power sources of the electric vehicle 10.

The electric vehicle 10 is equipped with a first inverter 92 that performs power conversion between the battery cells 91 and the first motor-generator 13. The electric vehicle 10 is equipped with a second inverter 93 that performs power conversion between the battery cells 91 and the second motor-generator 50.

The first motor-generator 13 and the second motor-generator 50 are rotating electrical machines that include at least a driving function for generating mechanical drive power from electrical power, and may further include a generator function for generating electrical power from mechanical drive power. For example, the first motor-generator 13 and the second motor-generator 50 are three-phase synchronous electric machines.

The first motor-generator 13 includes a stator 14, a rotor 15, and a rotary shaft 16. The stator 14 is fixed to the electric vehicle 10 so as to be non-rotatable. The rotor 15 is rotatable relative to the stator 14. The rotary shaft 16 is fixed to the rotor 15. Accordingly, the rotary shaft 16 rotates together with the rotor 15. The rotary shaft 16 extends in a vehicle front-rear direction.

The second motor-generator 50 includes a stator 51, a rotor 52, and an output shaft 53. The stator 51 is fixed to the electric vehicle 10 so as to be non-rotatable. For example, the stator 51 is fixed to a housing 70, which will be discussed below. The rotor 52 is rotatable relative to the stator 51. The output shaft 53 is fixed to the rotor 52. Accordingly, the output shaft 53 rotates together with the rotor 52. The output shaft 53 extends in the vehicle width direction. An output gear 54 is fixed to the output shaft 53. Accordingly, the output gear 54 rotates together with the output shaft 53.

The first inverter 92 and the second inverter 93 are, for example, devices in which switching elements and other components are mounted on a plate-shaped circuit board. The first inverter 92 and the second inverter 93 are known power supply circuits that convert direct current to alternating current and convert alternating current to direct current.

The electric vehicle 10 includes a charging port assembly 97 configured to be connected to an external power supply in order to charge the battery cells 91 with electric power supplied from the external power supply. The electric vehicle 10 is a plug-in hybrid electric vehicle.

The charging port assembly 97 is provided with a first charging port 94 and a second charging port 95 as charging inlets for connecting a connector of an external power supply. The first charging port 94 is a charging inlet used for fast charging with a high-voltage DC power supply, such as 50 kW. The second charging port 95 is a charging inlet used for standard charging, which is performed using an AC power supply such as 100 V or 200 V. When the connector of the external power supply is connected to the charging inlet, the electric vehicle 10 is connected to the external power supply.

The first charging port 94 is electrically connected to the battery pack 90. A DC power supply is connected to the first charging port 94. The DC power input from the DC power supply connected to the first charging port 94 is supplied to the battery cells 91.

The second charging port 95 is electrically connected to the vehicle on-board charger 96. The vehicle on-board charger 96 is electrically connected to the battery pack 90. The vehicle on-board charger 96 converts AC power input from an AC power supply connected to the second charging port 95 into DC power, and then delivers the DC power to the battery cells 91 to charge the battery cells 91.

### Drivetrain of the Electric Vehicle 10

The crankshaft 12 of the engine 11 is connected to a front portion of the rotary shaft 16 of the first motor-generator 13 in the vehicle front-rear direction via a clutch mechanism 17 surrounded by a long-dash double-short-dash line.

The clutch mechanism 17 adjusts the torque transmitted between the crankshaft 12 and the rotary shaft 16 of the first motor-generator 13. When the clutch mechanism 17 is in an engaged state, the crankshaft 12 and the rotary shaft 16 of the first motor-generator 13 are coupled to each other. In contrast, when the clutch mechanism 17 is in a disengaged state, the crankshaft 12 and the rotary shaft 16 of the first motor-generator 13 are decoupled.

A rear portion of the rotary shaft 16 of the first motor-generator 13 is connected to an input shaft of a transmission device 18. The transmission device 18 has a known configuration. An output shaft of the transmission device 18 is connected to an input shaft of a transfer case 19.

The transfer case 19 is a known front-and-rear wheel power distribution device. The transfer case 19 distributes all the rotational drive power of the engine 11 or the first motor-generator 13 only to the rear wheels 67, or distributes the rotational drive power of the engine 11 or the first motor-generator 13 to the front wheels 28 and the rear wheels 67.

Power Transmission Path Between the Transfer Case 19 and the Front Wheels 28

The electric vehicle 10 includes a front propeller shaft 20, a front differential 21, and two front drive shafts 27 that are arranged in that order from the transfer case 19 in the power transmission path between the transfer case 19 and the front wheels 28. These components have known configurations.

The front propeller shaft 20 is a rotating member that transmits the rotational drive power of the engine 11 or the first motor-generator 13 to the front wheels 28. The transfer case 19 includes, for example, a clutch mechanism that adjusts the torque transmitted between the transfer case 19 and the front propeller shaft 20. When the clutch mechanism is in a disengaged state, the electric vehicle 10 is enabled for two-wheel-drive operation. When the clutch mechanism is in an engaged state, the electric vehicle 10 is enabled for four-wheel-drive operation.

The front differential 21 includes a front differential ring gear 22 and a front differential case 23. The front differential ring gear 22 is provided on the outer periphery of the front differential case 23. The front differential ring gear 22 meshes with a pinion gear provided at a front end of the front drive shaft 27. A front differential pinion shaft 24, two front differential pinion gears 25, and two front differential side gears 26 are located in the internal space of the front differential case 23. The two front differential pinion gears 25 and the two front differential side gears 26 are, for example, bevel gears.

The front differential pinion shaft 24 is fixed inside the front differential case 23. The front differential pinion shaft 24 extends through the two front differential pinion gears 25. Each of the front differential pinion gears 25 meshes with both of the front differential side gears 26. The right front differential side gear 26 is connected to a right front drive shaft 27. The left front differential side gear 26 is connected to the left front drive shaft 27.

The right front drive shaft 27 is a rotating member that couples the right front differential side gear 26 to the right front wheel 28. The left front drive shaft 27 is a rotating member that couples the left front differential side gear 26 to the left front wheel 28.

Power Transmission Path Between the Transfer Case 19 and the Rear Wheels 67

The electric vehicle 10 includes the rear propeller shaft 30, the driving device 100, and two rear drive shafts 66 disposed in that order from the transfer case 19 in the power transmission path between the transfer case 19 and the rear wheels 67.

The rear propeller shaft 30 transmits the rotational drive power output from the engine 11 rearward. The hypoid pinion 31 is provided at the rear end of the rear propeller shaft 30. The hypoid pinion 31 is fixed to the rear propeller shaft 30 so as to be non-rotatable relative thereto. The hypoid pinion 31 is a truncated cone-shaped gear.

The driving device 100 includes a rear portion of the rear propeller shaft 30, the hypoid pinion 31, the speed reduction mechanism 40, and the second motor-generator 50, which are accommodated in the housing 70 fixed to the vehicle body. The driving device 100 accommodates the rear differential 60. The rear differential 60 is a differential device. The rear differential 60 includes a rear differential ring gear 61 and a rear differential case 62.

The speed reduction mechanism 40 includes a rotary shaft 44 extending in the vehicle width direction, a first reduction gear 41, a second reduction gear 42, and a third reduction gear 43. The first reduction gear 41, the second reduction gear 42, and the third reduction gear 43 are fixed to the rotary shaft 44 so as to be non-rotatable relative thereto. The third reduction gear 43 is disposed between the first reduction gear 41 and the second reduction gear 42.

The first reduction gear 41 is a hypoid gear that meshes with the hypoid pinion 31. The first reduction gear 41 is a truncated cone-shaped gear. The second reduction gear 42 meshes with the output gear 54, fixed to the output shaft 53 of the second motor-generator 50. The third reduction gear 43 meshes with the rear differential ring gear 61.

Since the first reduction gear 41 is fixed to the rotary shaft 44, rotation of the rear propeller shaft 30 is transmitted to the rotary shaft 44 via the first reduction gear 41. Since the second reduction gear 42 is fixed to the rotary shaft 44, rotation of the output shaft 53 is transmitted to the rotary shaft 44 via the second reduction gear 42. Since the third reduction gear 43 is fixed to the rotary shaft 44, rotation of the rotary shaft 44 is transmitted to the rear differential ring gear 61. That is, since the third reduction gear 43 is fixed to the rotary shaft 44, rotation of the rotary shaft 44 is transmitted to the differential device.

A rear differential pinion shaft 63, two rear differential pinion gears 64, and two rear differential side gears 65 are located in the internal space of the rear differential case 62. The two rear differential pinion gears 64 and the two rear differential side gears 65 are, for example, bevel gears.

The rear differential pinion shaft 63 is fixed inside the rear differential case 62. The rear differential pinion shaft 63 extends through the two rear differential pinion gears 64. Each of the rear differential pinion gears 64 meshes with both of the rear differential side gears 65. The right rear differential side gear 65 is connected to the right rear drive shaft 66. The left rear differential side gear 65 is connected to the left rear drive shaft 66.

The right rear drive shaft 66 is a rotating member that couples the right rear differential side gear 65 to the right rear wheel 67. The left rear drive shaft 66 is a rotating member that couples the left rear differential side gear 65 to the left rear wheel 67.

### Configuration of the Driving Device 100

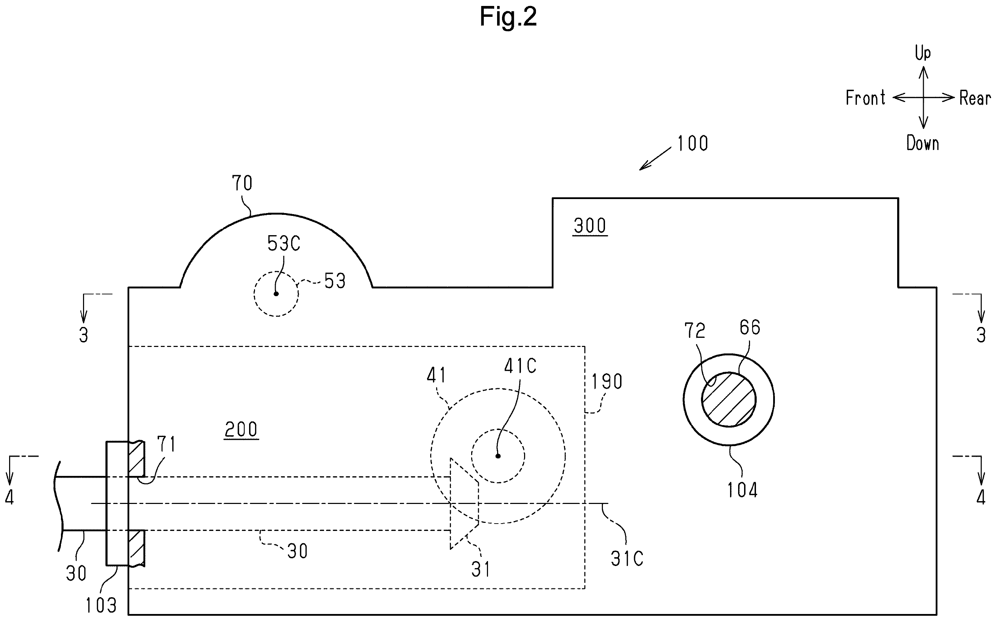

Fig. 2 schematically illustrates the driving device 100 as viewed from the vehicle left side.

As shown in Fig. 2, the housing 70 of the driving device 100 has a through-hole 71 in the front surface. The rear propeller shaft 30 is inserted into the through-hole 71. An oil seal 103 provides sealing between the rear propeller shaft 30 and the through-hole 71.

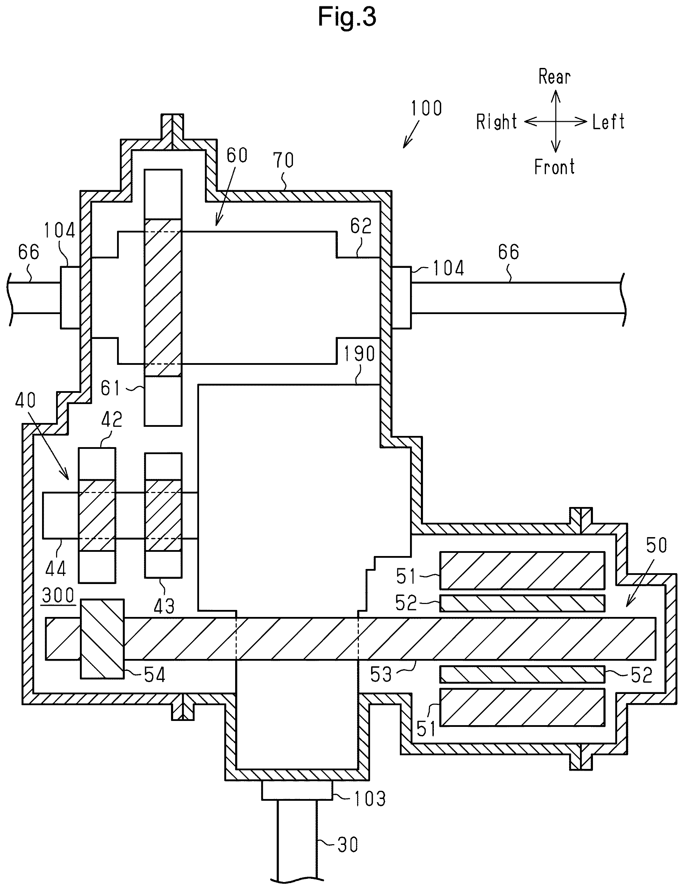

The housing 70 has a through-hole 72 in the left surface thereof. The left rear drive shaft 66 is inserted through the through-hole 72. An oil seal 104 provides sealing between the left rear drive shaft 66 and the through-hole 72. The housing 70 also has a through-hole in the right surface thereof. The right rear drive shaft 66 is inserted through the through-hole. As shown in Fig. 3, an oil seal 104 provides sealing between the right rear drive shaft 66 and the through-hole.

As shown in Fig. 2, the housing 70 includes a first accommodating chamber 200 and a second accommodating chamber 300. A partition wall 190 indicated by a broken line is provided between the first accommodating chamber 200 and the second accommodating chamber 300. The first accommodating chamber 200 is surrounded by the partition wall 190.

The output shaft 53 of the second motor-generator 50 is disposed at a position upward of the rear propeller shaft 30. The output shaft 53 is disposed in the second accommodating chamber 300.

The rear propeller shaft 30, the hypoid pinion 31, and the first reduction gear 41 are accommodated in the first accommodating chamber 200. A rotation axis 31C of the hypoid pinion 31, which is indicated by a long-dash short-dash line, and a rotation axis 41C of the first reduction gear 41 are in a skewed relationship.

Fig. 3 is a cross-sectional view taken along line 3-3 of Fig. 2. Fig. 3 shows a cross section of the driving device 100 at the same height as a rotation axis 53C of the output shaft 53.

As shown in Fig. 3, the second motor-generator 50, the speed reduction mechanism 40, and the rear differential 60 are disposed in the order of the second motor-generator 50, the speed reduction mechanism 40, and the rear differential 60 from the front.

The second accommodating chamber 300 accommodates the stator 51, the rotor 52, the output shaft 53, the output gear 54, and the second reduction gear 42. The second accommodating chamber 300 also accommodates the third reduction gear 43 and the rear differential 60. The second reduction gear 42 has a larger diameter than the output gear 54. The rear differential ring gear 61 has a larger diameter than the third reduction gear 43. Accordingly, the speed reduction mechanism 40 is configured such that the rotational speed of the rear differential ring gear 61 is lower than the rotational speed of the output gear 54.

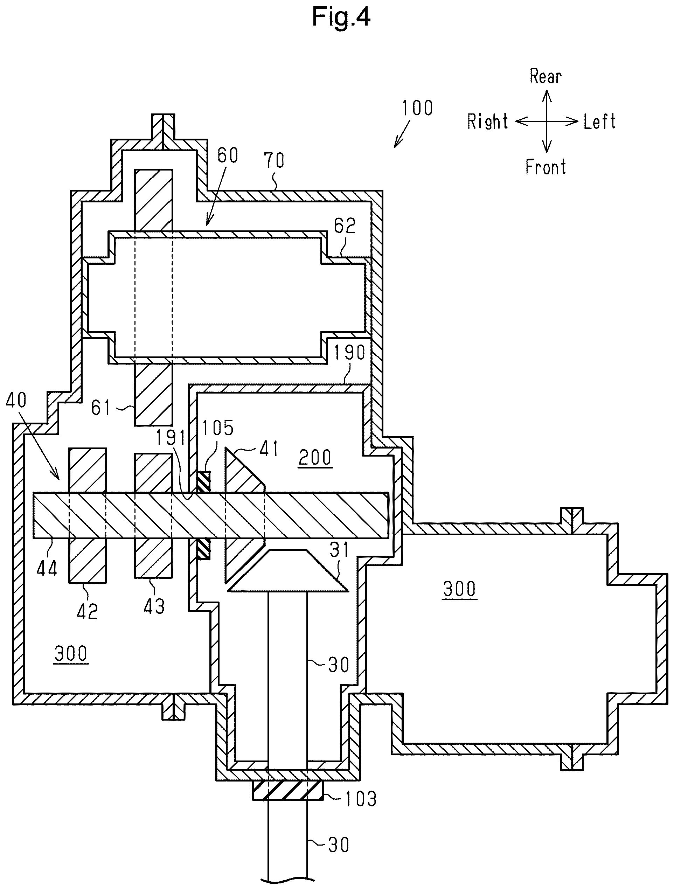

Fig. 4 is a cross-sectional view taken along line 4-4 of Fig. 2. Fig. 4 shows a cross section of the driving device 100 at the same height as the rotation axis 41C of the first reduction gear 41.

As shown in Fig. 4, a through-hole 191 is formed in the partition wall 190. The rotary shaft 44 of the speed reduction mechanism 40 extends from the inside of the first accommodating chamber 200 to the second accommodating chamber 300 through the through-hole 191. An oil seal 105 provides sealing between the rotary shaft 44 and the through-hole 191.

The first accommodating chamber 200 accommodates the hypoid pinion 31 and the first reduction gear 41. The first accommodating chamber 200 contains a first oil. The second accommodating chamber 300 contains a second oil having a lower viscosity than the first oil.

### Operation of the Present Embodiment

The driving device 100 is configured such the first accommodating chamber 200 and the second accommodating chamber 300 can contain oils having different viscosities. The first accommodating chamber 200 accommodates the first reduction gear 41, which is a hypoid gear, and the hypoid pinion 31. The second accommodating chamber 300 accommodates the second motor-generator 50. The viscosity of the second oil contained in the second accommodating chamber 300 is lower than the viscosity of the first oil contained in the first accommodating chamber 200.

### Advantages of the Present Embodiment

(1) The driving device 100 efficiently lubricates the hypoid gear by introducing, into the first accommodating chamber 200, the first oil, which has a relatively high viscosity and is suitable for lubricating hypoid gears. Further, since the second accommodating chamber 300 contains the second oil, which has a lower viscosity than the first oil, the driving device 100 efficiently cools the second motor-generator 50.
(2) The driving device 100 includes the rear differential 60. The rear differential 60 is a differential device. The rear differential 60 includes the rear differential ring gear 61 and the rear differential case 62. The rear differential case 62 is fixed to the rear differential ring gear 61 and has an internal space. The two rear differential pinion gears 64 and the two rear differential side gears 65 are located in the internal space of the rear differential case 62. The speed reduction mechanism 40 includes the third reduction gear 43. The third reduction gear 43 meshes with the rear differential ring gear 61. Since the third reduction gear 43 is fixed to the rotary shaft 44 of the speed reduction mechanism 40, rotation of the rotary shaft 44 is transmitted to the rear differential 60. The rear differential 60 and the third reduction gear 43 are accommodated in the second accommodating chamber 300.
   The oil that lubricates the two rear differential pinion gears 64 and the two rear differential side gears 65 is preferably an oil having a lower viscosity than the oil used to lubricate hypoid gears. The oil that lubricates the rear differential ring gear 61 and the third reduction gear 43 preferably has a lower viscosity than the oil used to lubricate hypoid gears. In the driving device 100, the two rear differential pinion gears 64, the two rear differential side gears 65, the rear differential ring gear 61, and the third reduction gear 43 are lubricated by the second oil, which has a lower viscosity than the first oil.
(3) The electric vehicle 10 includes the engine 11 and the second motor-generator 50, which are power sources. The electric vehicle 10 includes the battery cells 91, which stores electric power to be supplied to the second motor-generator 50, and the battery pack 90, which accommodates the battery cells 91 therein. The electric vehicle 10 includes the driving device 100 and the rear propeller shaft 30, which transmits rotational drive power output from the engine 11 to the rear portion of the electric vehicle 10 in the vehicle front-rear direction. Since the second accommodating chamber 300 contains the second oil, which has a lower viscosity than the first oil, the driving device 100 efficiently cools the second motor-generator 50. In the electric vehicle 10, since the second motor-generator 50 as a power source is properly cooled, the temperature rise of the second motor-generator 50 during traveling is readily suppressed.
(4) The electric vehicle 10 includes the charging port assembly 97, which is connectable to an external power supply in order to charge the battery cells 91 with electric power supplied from the external power supply. The electric vehicle 10 is therefore a plug-in hybrid electric vehicle. A plug-in hybrid electric vehicle more often operates the second motor-generator 50 as a drive source than a hybrid electric vehicle. Accordingly, compared with a hybrid electric vehicle, the temperature of the second motor-generator 50 in a plug-in hybrid electric vehicle is more likely to increase. Compared with a hybrid electric vehicle, a plug-in hybrid electric vehicle needs to more effectively cool the second motor-generator 50. In the electric vehicle 10, the second motor-generator 50 is cooled effectively by an oil having a lower viscosity than an oil that lubricates the hypoid gear. In the electric vehicle 10, the second motor-generator 50, which is a power source, is suitably cooled. Therefore, even when a state in which the second motor-generator 50 is caused to function as a drive source continues, an increase in the temperature of the second motor-generator 50 is readily suppressed.

### Modifications

The above-described embodiment may be modified as follows. The above-described embodiment and the following modifications of the above-described embodiment can be combined as long as the combined modifications remain technically consistent with each other.

The driving device 100 may be configured such that the first accommodating chamber 200 accommodates the output gear 54 and the second reduction gear 42.

The driving device 100 may be configured such that the first accommodating chamber 200 accommodates the rear differential 60 and the third reduction gear 43.

The order of the first reduction gear 41, the second reduction gear 42, and the third reduction gear 43 is not limited to the order of the first reduction gear 41, the third reduction gear 43, and the second reduction gear 42 from the left side to the right side of the vehicle. For example, the driving device 100 may be configured such that the second reduction gear 42 is disposed between the third reduction gear 43 and the first reduction gear 41.

The electric vehicle 10 does not necessarily need to be a plug-in hybrid electric vehicle. Specifically, the electric vehicle 10 may be a hybrid electric vehicle that does not include the charging port assembly 97.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A driving device (100) mounted on a vehicle (10), comprising:
a housing (70) including a first accommodating chamber (200), a second accommodating chamber (300), a partition wall (190) between the first accommodating chamber (200) and the second accommodating chamber (300), and a through-hole (191) formed in the partition wall (190);
a motor (50, MG);
an output gear (54) provided on an output shaft (53) of the motor (50, MG);
a hypoid pinion (31) provided at a rear end of a propeller shaft (30) in a front-rear direction of the vehicle (10); and
a speed reduction mechanism (40) to which rotation of the output gear (54) and rotation of the hypoid pinion (31) are transmitted, wherein
the speed reduction mechanism (40) includes:
a rotary shaft (44) extending from the first accommodating chamber (200) to the second accommodating chamber (300) through the through-hole (191);
a first reduction gear (41) that is a hypoid gear meshing with the hypoid pinion (31); and
a second reduction gear (42) that meshes with the output gear (54),
the driving device (100) is configured such that the first reduction gear (41) and the second reduction gear (42) are fixed to the rotary shaft (44) to transmit rotation of the propeller shaft (30) to the rotary shaft (44) via the first reduction gear (41), and to transmit rotation of the output shaft (53) to the rotary shaft (44) via the second reduction gear (42),
the first accommodating chamber (200) accommodates the hypoid pinion (31) and the first reduction gear (41), and is configured to contain a first oil,
the second accommodating chamber (300) accommodates the motor (50, MG) and is configured to contain a second oil having a lower viscosity than the first oil, and
an oil seal (105) provides sealing between the rotary shaft (44) and the through-hole (191).

2. The driving device (100) according to claim 1, wherein the second accommodating chamber (300) accommodates the output gear (54) and the second reduction gear (42).

3. The driving device (100) according to claim 1 or 2, further comprising a differential device (60), wherein
the differential device (60) includes:
a ring gear (61);
a differential case (62) fixed to the ring gear (61) and including an internal space; and
two differential side gears (65) and two differential pinion gears (64) located in the internal space,
the speed reduction mechanism (40) includes a third reduction gear (43) that meshes with the ring gear (61),
the driving device (100) is configured such that the third reduction gear (43) is fixed to the rotary shaft (44) to transmit rotation of the rotary shaft (44) to the differential device (60), and
the second accommodating chamber (300) accommodates the differential device (60) and the third reduction gear (43).

4. The driving device (100) according to claim 3, wherein the third reduction gear (43) is disposed between the first reduction gear (41) and the second reduction gear (42).

5. An electric vehicle (10), comprising:
power sources including an engine and a motor (50, MG);
a battery cell (91) configured to store electric power to be supplied to the motor (50, MG);
a battery pack (90) that accommodates the battery cell (91) therein;
a propeller shaft (30) configured to transmit rotational drive power output from the engine (11) rearward; and
the driving device (100) according to any one of claims 1 to 4.

6. The electric vehicle (10) according to claim 5, wherein the electric vehicle (10) is a plug-in hybrid electric vehicle including a charging port assembly (97) configured to be connectable to an external power supply to charge the battery cell (91) with electric power supplied from the external power supply.
